# EUROPEAN PATENT SPECIFICATION

(11) **EP 0 280 346 B1**
(45) Date of publication and mention of the grant of the patent: **01.12.1993**
(21) Application number: 88200147.2
(22) Date of filing: 28.01.1988
(51) Int. Cl.: G05B 19/04

(54) **Command and control device for the members of restoration of the thread continuity on coner machines**
Befehls- und Steuergerät für das Fadenverbindungsteil einer Spulmaschine
Dispositif de contrôle et de commande pour les organes de restauration de la continuité des fils sur des bobineuses

(30) Priority: 06.02.1987 IT 1927587
(43) Date of publication of application: 31.08.1988
(73) Proprietor: SAVIO MACCHINE TESSILI S.r.l., I-33170 Pordenone (IT)
(72) Inventor: Colli, Luigi, I-33170 Pordenone (IT); Badiali, Roberto, I-33170 Pordenone (IT); Marangone, Nereo, I-33170 Pordenone (IT)
(74) Representative: Fusina, Gerolamo

(56) References cited:
- DE-A- 2 647 118
- DE-A- 3 438 962
- GB-A- 2 169 104

## Description

The present invention relates to a device for controlling members for restoration of the continuity of threads being wound in a winding machine having a plurality of winding positions.

The winding operation consists substantially in transferring thread from a starting package and winding it up on a rigid tube, for forming a wound bobbin of crossing turns, and in depurating the thread during said transfer from its imperfections and faults: thick places, clots, "flashes", weak points, flocks ... Said defects are removed by cutting the faulty length and joining the free thread ends.

Such joining can take place either by means of a true knot - e.g., by a fisherman's knot or by a weaver's knot - produced by a mechanical knotting unit, or by means of a pneumatic or friction joint which untwists the fibres of the cut thread ends, mixes them and twists them together again, giving again the cut thread its continuity, without introducing into it the irregularity - even if of minor impact - as represented by a true knot.

The operation of depuration of the thread from its defects is commonly denominated as the "slub catching", in that the defects are detected by a slub catcher, sensitive to thread defects, which can interrupt the thread by itself, or can actuate a separate cutting member.

The interruption of the thread causes the breaking and the stopping of the winding operation; the thread ends are held by movable suction nozzles and are brought to the joining device or knotting unit, the joined thread is kept back to its normal position, and the winding is started up again, the bobbin and its drive cylinder are made re-start from stationary up to the steady state speed, which generally corresponds to 600-1,400 metres/minute.

During such operations, the machine requires both a certain suction capacity, for holding and correctly positioning the broken thread ends and for removing the cut thread lengths, and a certain drive power, for driving the different mechanical members of search, positioning and handling of both the broken thread ends and the joined thread.

Generally, winding machines are equipped with independent or centralized drives of the cylinders which keep the bobbin moving, and centralized drives for the auxiliary services, such as those described above.

They have at one of their ends a control head, which, among others, contains the electrical motor which, by means of a long drive shaft, drives the devices carrying out the restoration of the continuity of the thread. In general, such a drive does not require high powers, but a rather high torque which, in the presence of a transmission by long drive shafts, can create several kinds of problems.

Such drive is in fact transmitted to a large number of winding positions, commonly denominated as "winding heads", along the front of the machine.

The machine head contains also a centralized suction unit which, by means of a distributor running along the whole machine front allows suction to be provided at each winding position, with high enough values of flowrate and vacuum.

It results hence evident that the dimensioning of the drive system for the thread joining devices, constituted by the electrical motor, a belt- or gearwheel-coupling, driving shaft and its supports, must be designed on the basis of the number of the simultaneous interventions of restoration of the continuity of cut or broken thread.

Such a dimensioning follows generally a compromise between the need for a quick thread restoration, for the purposes of limiting the stillstand time and increasing the machine operation factor, and the need of avoiding over-dimensionings, for the purpose of containing the costs of the machine.

It results also evident that the dimensioning of the suction system, constituted by an electrical drive motor, the suction fan and the distributor of the same suction, is determined by the number of positions to be served at the same time. Also this dimensioning is performed by following a compromise analogous to that previously mentioned.

Such a compromise corresponds, in most cases, to approximately 5-20% of the winding positions of the winding machine.

The simultaneous intervention on an excessive number of positions can have serious consequences on the machine and on its operation. As relates to the centralized drive of the thread restoration devices, both the motor and the shaft and their coupling by means of belts or gearwheels undergo a much higher stress.

From a purely electrical standpoint, an electrical motor can generally supply power outputs even considerably larger than its rated value, at the cost of considerable overheatings; that could be allowed for very short periods only, beyond which the motor would get irreparably damaged, always on the condition that the power supply lines so allows. From the mechanical point of view, in that case both the transmission and the same shaft could be endangered, by being submitted to an excessively high drive torque.

As to the suction system, the simultaneous intervention on a too large number of winding positions causes the lowering of the vacuum level - or, more precisely, of the pressure difference existing between the external atmosphere and the pressure existing at the nozzles or inside the suction manifold - under the limit which guarantees the capture of the thread ends and their subsequent correct positioning inside the joining devices, the suction of the cut thread ends, and so forth.

This excessive request for simultaneous interventions is not a remote hypothesis, but it can occur with a certain frequency.

Besides the case in which a very irregular material must be processed, or too high processing speeds are used, such an event can occur at the starting-up of the winding machine, when the attending operator presses the pushbuttons or actuates the start-up levers of each winding position, according to a too fast sequence. Such an event can occur with electronic slub catchers, when disturbances to the electrical distribution network, lightnings or overvoltages cause in most, or in all, of the slub catchers, the generation of the intervention control signal. In that case, one can see a true failure of the machine, which results incapable of complying with all of the intervention requests, and stalls. The starting up again requires a laborious operation by the attending personnel.

A device for controlling a plurality of operating positions in a textile machine is known from GB-A-2 169 104, which relates to a knitting machine and in which the device has the features of the preamble of claim 1.

The central control unit is provided for delivering control and pattern data to the individual operating positions by interface devices, the control and pattern data being stored in the memory of the central control unit. Individual control units associated to the operating positions evaluate the received data for detection of errors, and error reports are transmitted to the central control unit for retransmission of control data to the individual control units or for stopping the machine.

This known device allows transmission of data only by one individual control unit each time, i.e. simultaneous transmission of data by more than one control unit is prevented. Thus this known device is not suitable for controlling restoration of thread continuity in winding positions of a winding machine in which thread interruption can be simultaneously present on many winding positions.

The technical problem which the present invention wants to solve is the management of a winding machine when the number of positions to be submitted to the intervention of slub catching and/or process restarting at a given time exceeds the number of positions of intervention for which the machine was designed.

The present invention provides a device of the kind specified above, by which the interventions of thread joining and re-starting up in a winding machine are carried out gradually, and which allows the load due to such interventions to be kept under safety limits of the winding machine, and to obtain, within said limits, the maximum efficiency of the machine.

The device according to the present invention has the features recited in claim 1. As to the components of the device, the following has to be noted:
a) Interface devices
   Each winding position is provided with an interface device, in form of a microprocessor-device, which is interplaced between the fault sensing means which signal the need for an intervention, and the members which perform the same intervention of restoration of the continuity of the thread and of re-starting up the winding according to an automated sequence of operations. Such interface device is connected with the central control unit, to which it sends the occurred request for intervention, from which it receives, and transmits to the intervention members, the consent and the intervention command - which can be received immediately, or after a certain delay - and to which it transmits the signal of end of intervention (e.g., when the wound bobbin starts revolving again).
b) Central Control unit
   The central control unit is connected both with the interface devices and with memory registers as described hereinbelow. It performs the following functions:
   - it supplies and conveys the information to and between the memory registers;
   - it verifies the number of winding positions wherein an intervention is taking place, and emits a signal of consent to proceed for each new request for intervention, only when it verifies that the number of interventions presently being taking place has not yet reached a maximum allowed number;
   - it gives the consent to the intervention, if the number of the winding positions wherein an intervention is taking place does not reach the maximum allowed number, through the respective interface device; on the contrary, it enters the intervention request signal into a "waiting list";
   - it manages the "waiting list", giving its consent to proceed to the interface device of another winding position, when from the interface device of another winding position wherein an intervention is taking place the signal arrives that the intervention is ended.
c) Storage means
   The memory unit comprises two or more memory registers, which contain the request and interventions made by and through each interface device, which are managed by the central control unit.
   At least one of such registers is an operating register, and the other registers are auxiliary registers. Each signal is necessarily constituted by a code of identification of the winding position which sends the signal or which receives the signal, by a time information and by an information of the signal type (request for intervention, consent to intervention, intervention end) combined in one sequence only.
   The time information is attributed by the central control unit, and it can consist, e.g., in a true time attributed by a time measuring member or in a progressive serial number, assigned by a progressive numbering member; such information is combined with the identification code. The time information can be constituted by the simple physical order of the initial signals (request for consent) which is made slide with advancing of the register. The information relating to the signal type can be explicit or implicit.
   The information relating to the signal type can be explicit when the interface device, together with its own identification code, supplies a signal of slub catcher intervened (request for intervention), or a signal of intervention beginning (intervention being taking place), but which is equivalent to the signal of consent supplied by the central control unit to the interface device, or a signal of winding running (intervention end).
   The information of the intervention type can be implicit.
   If one considers that the sequence of conditions of a winding position can be cyclically only as follows:
   - slub catcher intervened (request for intervention);
   - intervention in progress;
   - winding running (intervention end),
   and that to each of these conditions there corresponds a signal and the sequence of signals is always the same, the number of subsequent signals relating to a given winding position supplies the winding position status information. In other words, since each complete intervention cycle requires a sequence of three signals, a number of signals corresponding to 3n, wherein n is a positive integer, zero included, indicates a running and normally operating winding position, or a stationary and inoperative winding position because to each number multiple of three no intervention corresponds, in that "three" indicates that the intervention is terminated. To a number of signals corresponding to 3n+1 a winding position corresponds, which requested the consent and is on the waiting list because the signal "one" corresponds to the request of intervention as listed above. To a number corresponding to 3n+2 a winding position on which the intervention is taking place corresponds (intervention in progress as listed above).
   Thus n also indicates the number of thread continuity restoration cycles already carried out on a given winding position.
   The detection of the recorded identification codes associated to the most recent time (or to the highest serial number) corresponding to the request for intervention constitutes the "waiting list", whilst that of the recorded identification codes associated to the most recent time (or to the highest serial number) corresponding to the consent to the intervention constitutes the list of the interventions being taking place.

It is provided to periodically "clean up" the operating register of the records which relate to the interventions ended, transferring them to the available auxiliary registers.

The analysis of the interventions ended may supply very useful information for an optimized management. It can identify - on the basis of the distribution of the interventions through the winding positions - both defects of the operation of the winding position and defects in slub catcher adjustment, occlusions or malfunctioning in the suction devices, and so forth.

The analysis and the processing, also partial, of the recorded data on the concluded interventions can be entrusted to the same central control unit. To the same central control unit, at least the detection of the intervention frequency on each winding position can be entrusted.

If, for example, a winding position requests an excessive number of interventions - as compared to the other winding positions - such event is a symptom of a probably systematic and not casual defect. In such case, the control unit signals to the operator, by means of an alarm, the anomalous frequency of interventions, and possibly stops the suspected winding position.

For a better understanding of the invention there is disclose now, referring to the figures, a typical simplified practical embodiment of the invention on an automatic winding machine.

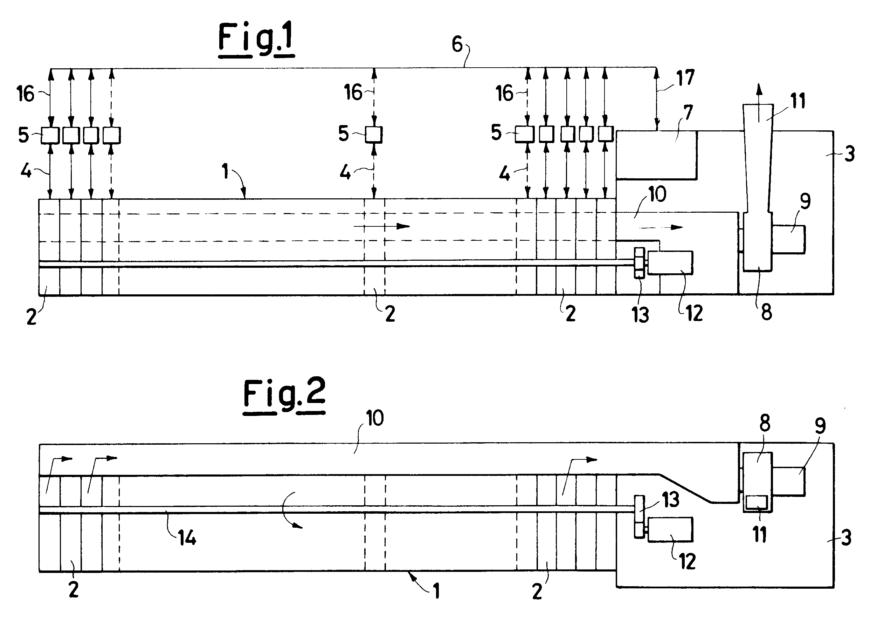

Figure 1 schematically shows the front view of the winding machine, and
Figure 2 schematically shows the plan view thereof;
Figure 3 shows a block diagram of a device according to the invention.

The automatic winding machine 1 is constituted by N independent winding positions (winding heads) 2 and by a control head 3. Each winding position, which in a known manner includes members for the restoration of the thread continuity, is identified by its own identification code or number Na,b,c,...x,y,z. Each winding position 2 is connected, by means of connections 4, to an own interface device 5; all of the interface devices 5 include a microprocessor and are connected through a transmission and reception signal line 6 to a central control unit 7 which contains storage means for memorizing data for intervention.

In the control head 3 also a suction device 8 is installed, which is driven by an electrical motor 9 and which distributes the suction to the winding positions 2, through a duct 10, and performs the exhausting through a duct 11, according to the arrows. The winding positions 2 are driven by an electrical motor 12 linked by a link 13 to a shaft 14, which transmits the motion to each winding position 2.

As already mentioned, each winding position is provided with an independent bobbin drive means. Such drive means comprises bobbin engagement means, disengagement means and braking means, controlled by the members which perform the check and the restoration of the thread continuity.

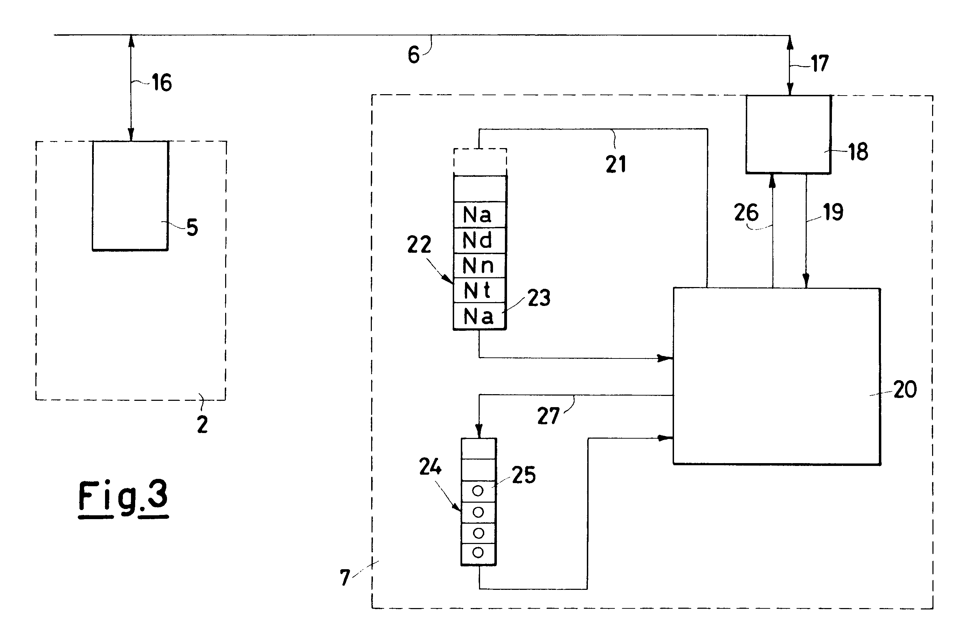

During the operation of the winding machine 1 it may occur, e.g., that a certain number of winding positions Na, b, c, ... x, y, z receive from a fault sensing means in form of a slub catcher or a sensor of thread presence the signal of interrupted yarn. The winding position 2 commands the bobbin stopping, and, referring to Figure 3, the microprocessor of the interface device 5 comes in connection, through the signal line 6, with the central control unit 7, and, through service lines 16 and 17, delivers a signal of the following type:
- Winding position No..., "ready for cycle" bit, wherein the winding position No... is the identification code, and the "ready for cycle" bit constitutes the request for the consent to the thread continuity restoration intervention by the shaft 14. A decoder 18 provided between the microprocessor of the interface devices 5 and a microprocessor 20 of the central control unit 7 transmits, through a connection 19, to the head microprocessor 20, being a part of the central control unit 7, an information "translated" for being "understood" by the microprocessor 20.

The microprocessor 20, through a line 21, records and stacks the requests for intervention in a first memory registers 22, maintaining the order according to which the requests arrived. The system logics is that denominated "first in, first out" - the first information to arrive is the first which leaves. In the operating register 22 there is hence a waiting list in form of a stack of positions 23 filled by the identification codes of the winding positions waiting for the intervention cycle according to the order in which the requests for intervention arrived (in Figure 3, for exemplifying purposes, the signal Na arrived before Nt, Nt before Nn, Nn before Nd, and so forth). The microprocessor 20, before giving its consent, verifies the situation of a second memory register 24. The consent is conditioned by the verification that the interventions which are simultaneously taking place are not already in the maximum allowed number, which is equivalent to the number of positions 25 available in the register 24.

If in the register 24 there are still available positions 25 (in Figure 3, for example, the available positions are six), the microprocessor 20 extracts from the stack's lowest position of the memory register 22 the identification code of the winding position (e.g., in Figure 3, the code of Na) which corresponds to the intervention request which has been waiting in the waiting list for a longer time and sends, through a line 26, the decoder 18, the lines 17, 6 and 16, to the interface device 5 of the winding position 2, a signal of consent of the following type:
- Winding position No..., "start cycle" bit,
wherein the "start cycle" bit constitutes the consent to the intervention taken from the first memory register 22.

At the same time, the microprocessor 20 fills, through a line 27, with a character representing an intervention taking place (in Figure 3, for exemplifying purposes, such a character is constituted by a point) an empty position 25 of the register 24; furthermore, it erases from the waiting list of register 22, the last position 23 (from which the signal Na was taken, according to Figure 3, and sent to the intervention) and advances downwards the whole stack by one position.

The above reported signal arrives, through the line 16, to the microprocessor of the winding position which corresponds to the identification code of the signal which arranges for the thread continuity restoration intervention to take place according to an automatic operation cycle. At the cycle end, the microprocessor of the winding position emits the return signal - Winding position No..., "Cycle performed" bit, wherein the "cycle performed" bit constitutes the information signal of intervention end.

The signal reaches, through the lines 16, 6, 17, 18, 19, the head microprocessor 20, which deletes from the first position 25 of the register 24, by starting from the top, the character which occupies it.

Thus, a further position of the register 24 becomes free, and, in case in the register 22 there are intervention requests in waiting list, the microprocessor 20 gives the signal of consent to the intervention to another winding position (in Figure 3, for example, to the winding position Nt) having requested an intervention recorded in the first memory register 22.

As it can be observed, the decoder 18 translates the information coming from the microprocessor of the interfaces 5 into a coding suitable for being managed by the microprocessor 20 of the central control unit 7, and vice-versa.

## Claims

1. A device for controlling members for restoration of the continuity of threads being wound in a winding machine having a plurality of winding positions (2), the device being of the type comprising:
- an interface device (5) for each operating position interposed between fault sensing means and said members, and including a microprocessor;
- a central control unit (7) connected to the interface devices (5) by a transmission and reception signal line (6), and including a microprocessor (20);
- storage means (22,24) in the central control unit (7) for memorizing data for intervention;
and being characterised in that
said interface devices (5) are each provided for sending to the central control unit (7) a signal of request for a thread continuity restoration intervention at each detection of a thread discontinuity by said fault sensing means, and a signal of intervention end at each thread continuity restoration, and said central control unit (7) is provided for sending to the interface devices (5) a consent signal when the number of simultaneous interventions is within a maximum preset limit,
and in that
said storage means are connected with the microprocessor (20) of the central control unit (7) and comprise at least two memory registers (22,24), one (22) thereof being provided for recording the requests for intervention in the form of a waiting list, and the other (24) thereof containing a number of positions (25) equal to said maximum number of simultaneous interventions, which are filled by characters representing interventions taking place,
wherein said central control unit (7) records the intervention requests in the first memory register (22) and monitors the second memory register (24) to determine whether there are available positions (25) in the second memory register (24) and when an available position exists the central control unit (7) sends a signal of consent through said signal line (6) to the interface device (5) corresponding to an intervention request taken from the first memory register (22) and fills the empty position (25) in the second memory register (24) with a character indicating an intervention taking place, and
wherein upon completion of the intervention at a winding position (2) the respective interface device (5) sends to the central control unit (7) along said signal line (6) a signal of intervention end, whereby the central control unit (7) causes deletion of a character from the second memory register (24) allowing another signal of consent to be sent to the interface device (5) of another winding position (2) having requested an intervention recorded in the first memory register (22).

2. A device as claimed in claim 1, characterised in that the central control unit (7) is provided for stacking the intervention requests in the first memory register (22) according to the order in which they are received by the control unit (7), and in that the ordered intervention requests are advanced by one position (23) each time a signal of consent is emitted by the central control unit (7), said signal of consent being that corresponding to the intervention request at the bottom of the waiting list which has been waiting in the list for a longer time.

3. A device as claimed in claim 1 or 2, characterised in that a decoder (18) is provided between the microprocessor of the interface devices (5) and the microprocessor (20) of the central control unit (7).

## Patentansprüche

1. Eine Einrichtung zum Steuern von Teilen für die Wiederherstellung der Kontinuität von Fäden, die in einer Wickelmaschine, welche eine Mehrzahl von Wickelpositionen (2) hat, aufgewickelt werden, wobei die Einrichtung von dem Typ ist, welcher umfaßt:
- eine Schnittstelleneinrichtung (5) für jede Betriebsposition, die zwischen ein Fehlerabfühlmittel und die Teile zwischengefügt ist und einen Mikroprozessor aufweist;
- eine zentrale Steuereinheit (7), die mit den Schnittstelleneinrichtungen (5) durch eine Sende- und Empfangssignalleitung (6) verbunden ist und einen Mikroprozessor (20) aufweist;
- Speichermittel (22, 24) in der zentralen Steuereinheit (7) zum Speichern von Daten für eine Intervention;
und welche dadurch **gekennzeichnet** ist, daß
jede der Schnittstelleneinrichtungen (5) dazu ausgerüstet ist, an die zentrale Steuereinheit (7) ein Signal der Anforderung einer Fadenkontinuitätswiederherstellungsintervention bei jeder Detektion einer Fadendiskontinuität durch das Fehlerabfühlmittel und ein Signal des Interventionsendes bei jeder Fadenkontinuitätswiederherstellung zu senden, und die zentrale Steuereinheit (7) dazu ausgerüstet ist, an die Schnittstelleneinrichtungen (5) ein Zustimmungssignal zu senden, wenn die Anzahl von gleichzeitigen Interventionen innerhalb einer maximalen voreingestellten Grenze ist,
und dadurch, daß
die Speichermittel mit dem Mikroprozessor (20) der zentralen Steuereinheit (7) verbunden sind und wenigstens zwei Speicherregister (22, 24) umfassen, von denen eines (22) zum Aufzeichnen der Anforderungen für eine Intervention in der Form einer Warteliste vorgesehen ist, und von denen das andere (24) eine gleich der maximalen Anzahl von gleichzeitigen Interventionen betragende Anzahl von Positionen (25) enthält, welche durch Zeichen gefüllt werden, die stattfindende Interventionen repräsentieren,
worin die zentrale Steuereinheit (7) die Interventionsanforderungen in dem ersten Speicherregister (22) aufzeichnet und das zweite Speicherregister (24) überwacht, um zu bestimmen, ob es verfügbare Positionen (25) in dem zweiten Speicherregister (24) gibt, und wenn eine verfügbare Position existiert, sendet die zentrale Steuereinheit (7) ein Signal der Zustimmung über die Signalleitung (6) zu der Schnittstelleneinrichtung (5), welche einer Interventionsanforderung entspricht, die aus dem ersten Speicherregister (22) genommen wird, und füllt die leere Position (25) in dem zweiten Speicherregister (24) mit einem Zeichen, welches angibt, daß eine Intervention stattfindet, und
worin bei Vollendung der Intervention an einer Wickelposition (2) die jeweilige Schnittstelleneinrichtung (5) längs der Signalleitung (6) an die zentrale Steuereinheit (7) ein Signal des Interventionsendes sendet, wodurch die zentrale Steuereinheit (7) die Löschung eines Zeichens aus dem zweiten Speicherregister (24) bewirkt, was es ermöglicht, daß ein anderes Signal der Zustimmung an die Schnittstelleneinrichtung (5) einer anderen Wickelposition (2), welche eine in dem ersten Speicherregister (22) aufgezeichnete Intervention angefordert hat, gesendet wird.

2. Eine Einrichtung, wie in Anspruch 1 beansprucht, dadurch **gekennzeichnet,** daß die zentrale Steuereinheit (7) zum Stapeln der Interventionsanforderungen in dem ersten Speicherregister (22) entsprechend der Reihenfolge, in welcher sie von der Steuereinheit (7) empfangen werden, ausgerüstet ist, und daß die geordneten Interventionsanforderungen jedes Mal um eine Position (23) vorgeschoben werden, wenn ein Signal der Zustimmung durch die zentrale Steuereinheit (7) ausgesandt wird, wobei das Signal der Zustimmung dasjenige ist, welches der im tiefsten Teil der Warteliste befindlichen Interventionsanforderung entspricht, die während einer längeren Zeit in der Liste gewartet hat.

3. Eine Einrichtung, wie in Anspruch 1 oder 2 beansprucht, dadurch **gekennzeichnet,** daß ein Decodierer (18) zwischen dem Mikroprozessor der Schnittstelleneinrichtungen (5) und dem Mikroprozessor (20) der zentralen Steuereinheit (7) vorgesehen ist.

## Revendications

1. Dispositif pour commander des organes permettant de rétablir la continuité de fils que l'on bobine dans une machine bobineuse comportant une pluralité de positions de bobinage (2), le dispositif étant du type qui comprend :
- un dispositif d'interface (5) pour chaque position de fonctionnement, intercalé entre un moyen de détection de défaut et lesdits organes et incluant un microprocesseur ;
- un organe central de commande (7) relié auxdits dispositifs d'interface (5) par une ligne (6) de transmission et de réception de signal et incluant un microprocesseur (20) ;
- des moyens de mémorisation (22, 24) dans l'organe central de commande (7) pour mémoriser des données d'intervention ;
et étant caractérisé en ce que chaque dispositif d'interface (5) est prévu pour envoyer à l'organe central de commande (7) un signal de requête en vue d'une intervention de rétablissement de la continuité du fil pour chaque détection d'une discontinuité de fil faite par ledit moyen de détection de défaut, ainsi qu'un signal de fin d'intervention pour chaque rétablissement de la continuité du fil, ledit organe central de commande (7) est prévu pour envoyer aux dispositifs d'interface (5) un signal de consentement quand le nombre d'interventions simultanées se situe dans une limite maximale préétablie,
et en ce que lesdits moyens de mémorisation sont reliés au microprocesseur (20) de l'organe central de commande (7) et comprennent au moins deux registres de mémoire (22, 24), l'un d'eux (22) étant prévu pour enregistrer les requêtes d'intervention sous forme d'une liste d'attente et l'autre (24) contenant un certain nombre de positions (25), égal audit nombre maximal d'interventions simultanées, qui sont remplies par des caractères représentant les interventions en cours,
dans lequel ledit organe central de commande (7) enregistre les requêtes d'intervention dans le premier registre de mémoire (22) et surveille le second registre de mémoire (24) pour déterminer s'il y a des positions disponibles (25) dans le second registre de mémoire (24) et, quand une position disponible existe, l'organe central de commande (7) envoie un signal de consentement sur ladite ligne de signal (6) jusqu'au dispositif d'interface (5) qui correspond à la requête d'intervention lue dans le premier registre de mémoire (22) et remplit la position vide (25) dans le second registre de mémoire (24) par un caractère indiquant qu'une intervention est en cours, et
dans lequel, lorsque l'intervention est terminée en une position de bobinage (2), le dispositif d'interface (5) respectif envoie à l'organe central de commande (7) sur ladite ligne de signal (6) un signal de fin d'intervention, ce qui fait que l'organe central de commande (7) provoque la suppression du caractère dans le second registre de mémoire (24) en permettant qu'un autre signal de consentement soit envoyé au dispositif d'interface (5) d'une autre position de bobinage (2) qui a requis une intervention, requête enregistrée dans le premier registre de mémoire (22).

2. Dispositif selon la revendication 1, caractérisé en ce que l'organe central de commande (7) est prévu pour empiler les requêtes d'intervention dans le premier registre de mémoire (22) suivant l'ordre dans lequel elles ont été reçues par l'organe central de commande (7), et en ce que les requêtes d'intervention ordonnées avancent d'une position (23) chaque fois qu'un signal de consentement est émis par l'organe central de commande (7), ledit signal de consentement étant celui qui correspond à la requête d'intervention se trouvant au bas de la liste d'attente, requête qui a attendu dans la liste pendant le plus longtemps.

3. Dispositif selon la revendication 1 ou 2, caractérisé en ce qu'un décodeur (18) est placé entre le microprocesseur des dispositifs d'interface (5) et le microprocesseur (20) de l'organe central de commande (7).
